# EUROPÄISCHE PATENTANMELDUNG

(11) **EP 4 793 525 A1**
(43) Veröffentlichungstag der Anmeldung: **19.08.2026**
(21) Anmeldenummer: 26156642.6
(22) Anmeldetag: 05.02.2026
(51) Int. Cl.: F16H 61/431, F16H 61/4026, F16H 61/4043

(54) **VERFAHREN ZUR ANSTEUERUNG EINES HYDROSTATISCHEN ANTRIEBS**

(30) Priorität: 12.02.2025 DE 102025105176
(71) Anmelder: Robert Bosch GmbH, 70442 Stuttgart (DE)
(72) Erfinder: Schuette, Michael, 89129 Langenau (DE); Mast, Michael, 88433 Schemmerhofen (DE)

(57) **Zusammenfassung**

Die vorliegende Erfindung betrifft ein Verfahren zum Betreiben eines Hydrauliksystems (100) einer mobilen Arbeitsmaschine, wobei das Hydrauliksystem (100) mit einer Hydraulikpumpe (2) versehen ist, die über eine erste Leitung (10) und eine zweite Leitung (11) mit einem Hydraulikmotor (4) verbunden ist, wobei das Verfahren folgende Schritte umfasst:
a) Steuern der Hydraulikpumpe mittels mindestens einer Stellgröße, wobei durch die mindestens eine Stellgröße ein Schwenkwinkel der Hydraulikpumpe und/oder eine Drehzahl der Pumpe direkt oder indirekt steuerbar ist;
b) Ermitteln einer Limitierungsgröße für die Hydraulikpumpendynamik mindestens auf Basis einer Betriebsgröße des Hydrauliksystems;
c) Limitieren einer Hydraulikpumpendynamik der Hydraulikpumpe unter Berücksichtigung der im Schritt ermittelten Limitierungsgröße, sodass der Druck in einer von der ersten und der zweiten Leitung während dem Steuern der Hydraulikpumpe nicht einen unteren Grenzwert unterschreitet.

## Beschreibung

### TECHNISCHER BEREICH

Die Erfindung betrifft ein Verfahren zum Betreiben eines Hydrauliksystems eines hydrostatischen Antriebs, vorzugsweise einer Arbeitsmaschine. Darüber hinaus betrifft diese Erfindung eine Steuereinheit, eine Arbeitsmaschine, die die Steuereinheit umfasst und ein Computerprogramm.

### STAND DER TECHNIK

Ein hydraulischer geschlossener Kreislauf bildet ein mechanisches System, das Hydraulikflüssigkeit nutzt, um Energie zu übertragen und Arbeit zu verrichten. Pumpe und Motor sind über zwei Leitungen, die Hochdruck- und Niederdruckseite, miteinander verbunden. Eine integrierte Speisepumpe versorgt die Pumpe im Kreislauf mit ausreichend Niederdruck und schützt sie so vor Kavitation. Sie kompensiert Leckageverluste und gleicht das durch Druckänderungen entstehende Kompressionsvolumen in den Leitungen aus. Die Speisepumpe trägt somit maßgeblich zur Temperaturregelung, Effizienzsteigerung, Sicherheit und Zuverlässigkeit des Gesamtsystems bei und gewährleistet dessen Funktionalität und Langlebigkeit.

Die Beschleunigung des Antriebssystems wird durch Veränderung des Volumenstroms der Hydraulikpumpe realisiert, wodurch sich der Arbeitsdruck ändert. Die Änderungsrate des Drucks über die Zeit wird als Druckanstiegsgeschwindigkeit bezeichnet. Hohe Druckanstiegsgeschwindigkeiten führen zu einer schnellen Kompression des Öls in den Arbeitsleitungen. Dieses komprimierte Volumen steht kurzzeitig nicht der Niederdruckseite zur Verfügung und muss durch die Speisepumpe ausgeglichen werden.

Um Schwankungen auf der Niederdruckseite auszugleichen, werden Akkumulatoren und leistungsstarke Speisepumpen verwendet. Akkumulatoren sind Druckspeicher, die Flüssigkeit unter Druck speichern. Obwohl sie nützlich sind, sind sie teuer in der Anschaffung und Wartung und erfordern qualifiziertes Fachpersonal. Zudem besteht das Risiko von Flüssigkeitslecks, wodurch sie als unzuverlässig gelten. Alternativ oder ergänzend werden größere Speisepumpen in das System integriert. Diese Pumpen arbeiten jedoch weniger effizient, da sie zu einer stärkeren Erwärmung des Systems führen.

Um diese Nachteile zu vermeiden, wurde in der Patentschrift DE 10 2018 205 194 A1 eine Vorrichtung entwickelt, bei der zwischen der Hochdruckseite und der Niederdruckseite ein Spülsystem in Kommunikation mit der Hochdruckseite und der Niederdruckseite geschaltet ist. Das Spülsystem enthält ein Wechselventil und ein Begrenzungsventil. Ebenfalls in Kommunikation mit der Hochdruckseite und der Niederdruckseite, parallel zum Spülsystem, ist das Bypassventil angeschlossen. Beim Öffnen oder Verschieben leitet das Bypassventil Flüssigkeit von der Hochdruckseite zur Niederdruckseite. Das Bypassventil weist einen Vorgabe-Druck auf, der über einem minimalen Druck der Niederdruckseite liegt, wobei das Bypassventil so konfiguriert ist, dass es bei einem Druck in der Niederdruckleitung öffnet, wenn dieser unter einen voreingestellten Druck fällt.

Hierdurch wird die Komplexität der Systemdynamik ignoriert, da andere relevante Einflussgrößen, wie die Drehzahl der Hydraulikpumpe oder der aktuelle Druckgradient, nicht berücksichtigt werden. Folglich reagiert das System verzögert und ungenau auf dynamische Lastwechsel, was zu suboptimalen Regelungsverhalten und einem erhöhten Kavitationsrisiko führt. Des Weiteren mangelt es dem System an Flexibilität und Anpassungsfähigkeit. Der Schwellenwert für das Bypassventil ist statisch und kann nicht an veränderliche Betriebsbedingungen angepasst werden. Unterschiedliche Lastanforderungen, Temperaturschwankungen des Hydrauliköls oder Viskositätsänderungen beeinflussen das Systemverhalten jedoch maßgeblich. Eine starre Regelung führt daher zu ineffizientem Betrieb, da das Bypassventil auch in Situationen öffnen kann, in denen nur eine geringfügige Druckkorrektur erforderlich wäre, was unnötige Energieverluste durch den Bypass-Fluss verursacht.

Ein weiterer Nachteil des im Stand der Technik beschriebenen Systems ist das binäre Verhalten des Bypassventils. Es öffnet entweder vollständig oder gar nicht, sobald der Niederdruck den Schwellenwert unter- bzw. überschreitet. Eine feinere, proportionale Regelung der Bypassmenge ist nicht möglich. Dadurch kann das System nicht optimal auf kleinere Druckschwankungen reagieren und es kommt zu Überschwingern im Druckverlauf, die die Systemstabilität beeinträchtigen und den Verschleiß der Komponenten erhöhen. Zusammenfassend lässt sich feststellen, dass das im Stand der Technik beschriebene System zwar einen grundlegenden Kavitationsschutz bietet, jedoch aufgrund seiner starren, rein druckbasierten Steuerung und des binären Verhaltens des Bypassventils nicht in der Lage ist, die Pumpendynamik effizient und an die jeweiligen Betriebsbedingungen angepasst zu regeln. Dies führt zu suboptimaler Systemleistung, erhöhtem Energieverbrauch und einem erhöhten Risiko von Kavitationsschäden.

Das Hauptziel dieser Erfindung ist es daher, den aktuellen Stand der Technik zu verbessern.

### KURZFASSUNG

Gemäß einer Ausführungsform der vorliegenden Erfindung wird ein Verfahren zum Betreiben eines Hydrauliksystems (100) einer mobilen Arbeitsmaschine beansprucht, wobei das Hydrauliksystem (100) mit einer Hydraulikpumpe (2) versehen ist, die über eine erste Leitung (10) und eine zweite Leitung (11) mit einem Hydraulikmotor (4) verbunden ist, wobei das Verfahren folgende Schritte umfasst:
a) Steuern der Hydraulikpumpe mittels mindestens einer Stellgröße, wobei durch die mindestens eine Stellgröße ein Schwenkwinkel der Hydraulikpumpe und/oder eine Drehzahl der Pumpe direkt oder indirekt steuerbar ist;
b) Ermitteln einer Limitierungsgröße für die Hydraulikpumpendynamik mindestens auf Basis einer Betriebsgröße des Hydrauliksystems;
c) Limitieren einer Hydraulikpumpendynamik der Hydraulikpumpe unter Berücksichtigung der im Schritt ermittelten Limitierungsgröße, sodass der Druck in einer von der ersten und der zweiten Leitung während dem Steuern der Hydraulikpumpe nicht einen unteren Grenzwert unterschreitet.

Durch eine reduzierte oder dynamisch angepasste Hydraulikpumpendynamik (z.B. Druckanstiegsgeschwindigkeit) lässt sich der benötigte Volumenstrom der Speisepumpe zur Kompensation des Kompressionsvolumens minimieren.

Diese Reduzierung des benötigten Speisevolumenstroms beugt Niederdruckeinbrüchen vor und reduziert die Anforderungen an die Speisepumpe. Dadurch können zusätzliche Komponenten wie Speicher oder komplexe hydraulische Schaltungen entfallen. Die Begrenzung der Druckanstiegsgeschwindigkeit lässt sich mit einer elektronisch geregelten Pumpe (EOC oder ECC) einfach realisieren. Diese Pumpen sind mit Drucksensoren in den Arbeitsleitungen und einem Schwenkwinkelsensor an der Schwenkwiege ausgerüstet, die die mechanischen Regelkreise durch elektronische Regelkreise ersetzen. Parameter wie Druck, Volumenstrom und Druckgradienten (Schwenkzeiten bzw. Druckanstiegszeiten) können so statisch oder dynamisch angepasst werden.

### KURZE BESCHREIBUNG DER FIGUREN

Die vorliegende Erfindung wird unter Bezugnahme auf die beigefügten Figuren beschrieben, wobei sich gleiche Bezugszeichen auf gleiche Teile und / oder auf ähnliche Teile und / oder auf entsprechende Teile des Systems beziehen. Zu den Figuren:
Fig. 1 zeigt einen hydraulischen Schaltplan eines hydrostatischen Fahrantriebes gemäß einer ersten Ausführungsform der vorliegenden Erfindung,
Fig. 2 zeigt ein schematisches Diagramm zur Veranschaulichung der Regelungsstrategie gemäß einer Ausführungsform der vorliegenden Erfindung,
Fig. 3 zeigt ein schematisches Diagramm zur Veranschaulichung der Regelungsstrategie gemäß einer Ausführungsform der vorliegenden Erfindung.

### DETAILLIERTE BESCHREIBUNG

Im Folgenden wird die vorliegende Erfindung unter Bezugnahme auf bestimmte Ausführungsformen beschrieben, wie sie in den beigefügten Figuren gezeigt sind. Nichtsdestotrotz ist die vorliegende Erfindung nicht auf die besonderen Ausführungsformen beschränkt, die in der folgenden detaillierten Beschreibung beschrieben und in den Figuren gezeigt sind, sondern die beschriebenen Ausführungsformen veranschaulichen lediglich einige Aspekte der vorliegenden Erfindung, deren Schutzbereich durch die Ansprüche definiert ist.

Weitere Änderungen und Variationen der vorliegenden Erfindung sind für den Fachmann klar. Die vorliegende Beschreibung umfasst somit alle Änderungen und / oder Variationen der vorliegenden Erfindung, deren Schutzbereich durch die Ansprüche definiert ist.

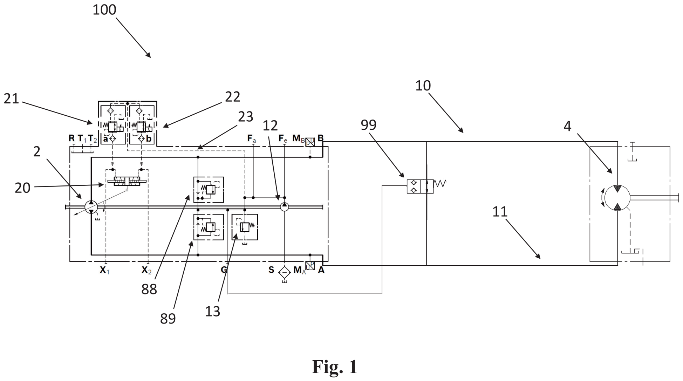

Wie in Figur 1 dargestellt ist, weist das Hydrauliksystem 100 eine Hydraulikpumpe 2 auf, die von einer Antriebsmaschine (nicht dargestellt) angetrieben wird. Vorzugsweise handelt es sich bei der Hydraulikpumpe 2 um eine verstellbare Pumpe. Die Hydraulikpumpe 2 ist über eine erste Leitung 10 und eine zweite Leitung 11 mit einem Hydraulikmotor 4 verbunden, sodass ein geschlossener Kreislauf entsteht. Für den Fall, dass die Hydraulikpumpe als Pumpe arbeitet, fungiert die erste Leitung 10 als Hochdruckleitung und die zweite Leitung 11 als Niederdruckleitung. Andersrum, für den Fall, dass die Hydraulikpumpe 2 als Motor während einer Verzögerung der mobilen Arbeitsmaschine arbeitet, fungiert die erste Leitung 10 als Niederdruckleitung und die zweite Leitung 11 als Hochdruckleitung.

Wie in Figur 1 dargestellt ist, wird eine Speisepumpe 12 mit der Hydraulikpumpe 2 gekoppelt, um Flüssigkeitsverluste, die während des Betriebs im geschlossenen Kreislauf auftreten, auszugleichen. Ein Speisedruckbegrenzungsventil 13 begrenzt den Speisedruck, sodass der Speisedruck limitiert wird. Der Speisedruck wird dann an die erste oder an die zweite Leitung 10, 11 zugeführt, je nachdem welche Leitung im Moment die Niederdruckleitung ist. Das geschieht mittels der Druckbegrenzungsventile 88 und 89, die konfiguriert sind, ein Volumenstrom des Speisedruckmittels Richtung der ersten oder der zweiten Leitung 10, 11 zu ermöglichen, falls der Druckunterschied zwischen dem Speisedruck und dem Niederdruckseiten-Druck größer als ein vorgegebener Wert ist, sodass das Rückschlagventil, das integriert in dem Druckbegrenzungsventil 88 oder 89 angeordnet ist, öffnen kann. Die Leitung, die die Speisepumpe 12 mit dem ersten und dem zweiten Druckbegrenzungsventil 88 und 89 verbindet (bei der der Druck im Wesentlichen konstant ist) wird im Verlauf der Beschreibung Speisedruckleitung genannt.

Wie in Figur 1 dargestellt ist, wird der Speisedruck an zwei Druckregelventile 21, 22 zugeführt, die für die Steuerung des Schwenkwinkels der Hydraulikpumpe 2 zuständig sind. Die Druckregelventile 21, 22 werden dann einen Steuerdruck an die zwei Kammern eines Hydrozylinders 20 zuführen. Wie schon erwähnt, weist der Hydrozylinder 20 eine erste Zylinderkammer und eine der ersten entgegenwirkende, zweite Zylinderkammer auf. Die erste Zylinderkammer ist über eine erste Stelldruckleitung mit dem Ausgang des ersten Druckregelventils 21 verbunden. In gleicher Weise ist die zweite Zylinderkammer über eine zweite Stelldruckleitung mit dem zweiten Druckregelventil 22 verbunden, welches an die Steuerdruckleitung 23 angeschlossen ist. Die Druckreduzierventile 21, 22 sind elektromagnetisch betätigbar, wobei der jeweils in der Stelldruckleitung resultierende Stelldruck pₐ (X1) bzw. p_{b} (X2) gemäß einer Ventilkennlinie proportional zu einem Ansteuerstrom lₐ bzw. l_{b} des Elektromagnets a bzw. b ist. Über die elektromagnetische Betätigung der Druckregelventile 21, 22 können somit über die Vorgabe der Ansteuerströme lₐ, l_{b} die Stelldrücke pₐ (X1), p_{b} (X2) der Zylinderkammern gesteuert werden. Zu diesem Zweck sind die Elektromagnete a, b der Druckreduzierventile 21,22 über eine jeweilige Signalleitung mit einer elektronischen Steuereinheit (nicht dargestellt) signalverbunden.

Wie schon erwähnt, ist die Steuerdruckleitung 23 mit der Speisepumpe 12 verbunden, wobei die Speisepumpe 12 auf der gleichen Triebwelle, wie die Hydraulikpumpe 2 sitzt, sodass die Steuerdruckleitung 23 mit Steuerdruckmittel aus der Speisepumpe 12 versorgbar ist.

Ein Bypassventil 99 ist zwischen der Hochdruckleitung 10 und der Niederdruckleitung 11 angeordnet und steht mit beiden Seiten in Verbindung. Das Bypassventil ist ein 2/2 Wege Ventil, das im Normalzustand (d.h. wenn ein bestimmter Speisedruck in der Speiseleitung vorhanden ist) geschlossen ist und verhindert, dass eine Strömung von Druckmittel aus der ersten Leitung zu der zweiten Leitung fließen kann (und natürlich auch in der umgekehrten Richtung). Wenn das Bypassventil 99 geöffnet wird (in der dargestellten Ausführungsform, wenn der Speisedruck unter ein bestimmtes Niveau sinkt), wird dieses einen Volumenstrom zwischen den zwei Leitungen 10, 11 ermöglichen, sodass der Hydraulikmotor 4 kurzgeschlossen werden kann.

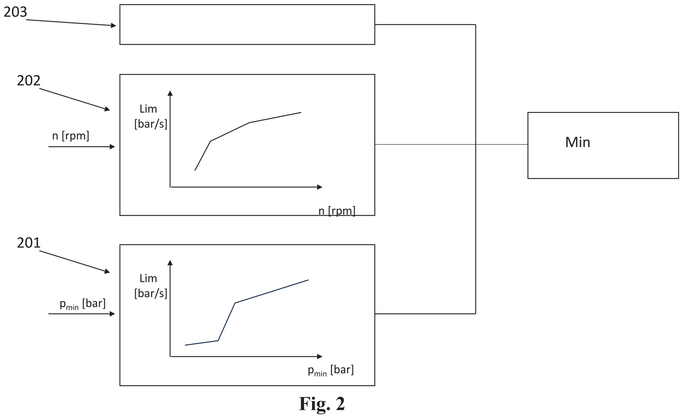

Wie schon erwähnt, Niederdruckeinbrüche in hydraulischen Systemen können zu Leistungseinbußen, Instabilitäten und sogar Schäden an Komponenten führen. Gemäß dem Stand der Technik wird das Bypassventil 99 benutzt, um Niederdruckeinbrüche zu vermeiden. Mit Bezug auf die Figuren 2 bis 3 werden nun verschiedene Strategien zur Minderung dieser Problematik beschrieben, durch die tatsächlich das Bypassventil 99 nicht mehr erforderlich ist.

Die Begrenzung der Druckanstiegsgeschwindigkeit (ΔP/Δt) ist ein effektiver Ansatz zur Kontrolle des benötigten Volumenstroms. Durch die Definition eines maximal zulässigen Gradienten wird gemäß der vorliegenden Erfindung sichergestellt, dass der zum Ausgleich des Kompressionsvolumens benötigte Volumenstrom die verfügbare Fördermenge der Pumpe nicht übersteigt.

Die Berechnung des Kompressionsvolumens kann anhand der Schlauchparameter (Länge, Innendurchmesser, Steifigkeit) sowie der Druckdifferenz und der Ölkompressibilität erfolgen. Alternativ kann das Kompressionsvolumen experimentell ermittelt werden. Der Einspeisevolumenstrom muss, abzüglich der Leckageverluste der hydraulischen Komponenten, größer oder gleich dem durch die Kompression des Fluids im System entstehenden Volumenstrom sein.

Die softwarebasierte Begrenzung des Druckgradienten ermöglicht eine präzise Anpassung des Volumenstrombedarfs an die verfügbare Fördermenge.

Figur 2 beschreibt ein Verfahren, das durch Begrenzung der Druckanstiegsgeschwindigkeit Niederdruckeinbrüche in hydraulischen Systemen verhindert.

Die Hydraulikpumpe 2 wird in der Regel mittels mindestens einer Stellgröße gesteuert, wobei durch diese mindestens eine Stellgröße ein Schwenkwinkel der Hydraulikpumpe und/oder eine Drehzahl der Pumpe direkt oder indirekt steuerbar ist. Die Idee der vorliegenden Erfindung besteht darin, durch Beeinflussung mindestens einer der Stellgrößen die Dynamik der Hydraulikpumpe 2 so zu limitieren, dass der Druck in der ersten und der zweiten Leitung 10, 11 während der Steuerung der Hydraulikpumpe einen unteren Grenzwert nicht unterschreitet.

In einem Schritt wird eine Limitierungsgröße für die Dynamik der Hydraulikpumpe mindestens auf Basis einer Betriebsgröße des Hydrauliksystems ermittelt. Im dargestellten Beispiel wird die Limitierungsgröße auf Basis der Drehzahl der Hydraulikpumpe 2 und eines an der Niederdruckseite erfassten Druckes ermittelt.

Insbesondere werden in einem ersten Schritt mindestens zwei provisorische Limitierungsgrößen jeweils auf Basis der Drehzahl und des Druckes ermittelt. Wie erwähnt, werden in diesem Schritt eine erste und eine zweite provisorische Limitierungsgröße ermittelt.

Die erste provisorische Limitierungsgröße 201 wird auf Basis des ermittelten Druckes berechnet. Wie in der Figur dargestellt, wird eine Funktion verwendet, bei der der ermittelte Druck als Eingangsgröße dient, um die erste Limitierungsgröße zu ermitteln.

Die zweite provisorische Limitierungsgröße 202 wird auf Basis der ermittelten Drehzahl der Hydraulikpumpe 2 berechnet. Wie in der Figur dargestellt, wird eine Funktion verwendet, bei der die Drehzahl als Eingangsgröße dient, um die zweite Limitierungsgröße zu ermitteln.

Im dargestellten Beispiel wird weiterhin eine dritte provisorische Limitierungsgröße 203 ermittelt, die eine physikalische Limitierung der Hydraulikpumpe berücksichtigt.

In einem weiteren Schritt wird die Limitierungsgröße als Minimum der drei ermittelten provisorischen Limitierungsgrößen berechnet.

In einem weiteren Schritt (nicht dargestellt) wird die Hydraulikpumpe 2 mittels mindestens einer Stellgröße gesteuert, wobei die Stellgröße so ausgewählt wird, dass die Limitierungsgröße berücksichtigt wird. Durch diese Lösung wird die Druckanstiegsgeschwindigkeit limitiert, falls diese sonst einen zu niedrigen Druck an der Niederdruckseite verursachen würde.

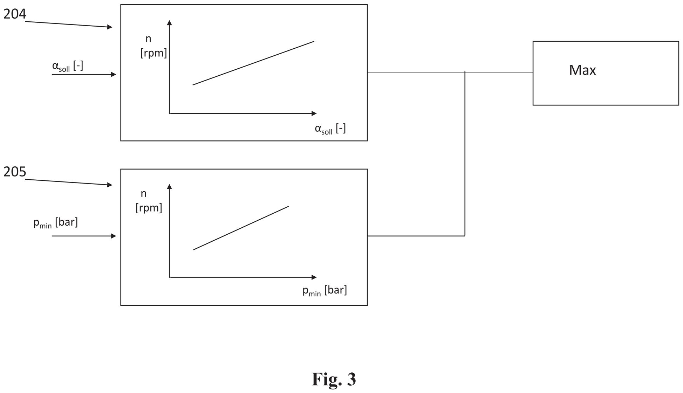

Figur 3 beschreibt eine weitere Ausführungsform der vorliegenden Erfindung. Wie bereits beschrieben, umfasst das Hydrauliksystem die Speisepumpe 12, die Druckmittel in die erste und/oder in die zweite Leitung fördert. Die Drehzahlen der Hydraulikpumpe und der Speisepumpe sind abhängig voneinander (im dargestellten Beispiel sind die Drehzahlen gleich, da die Hydraulikpumpe 2 und die Speisepumpe 12 an der gleichen Welle angeordnet sind).

In einem Schritt 204 wird eine erste provisorische Soll-Drehzahl auf Basis eines Soll-Winkelverlaufs der Hydraulikpumpe ermittelt. Darüber hinaus wird in einem parallelen Schritt auf Basis des Druckes an der Niederdruckseite eine zweite provisorische Soll-Drehzahl ermittelt. Die tatsächliche Soll-Drehzahl der Hydraulikpumpe 2 wird als Maximum der ersten und der zweiten provisorischen Soll-Drehzahl verwendet.

Es wird darauf hingewiesen, dass die in Figur 3 beschriebene Lösung auch bei der Ausführungsform von Figur 2 verwendet werden kann, sodass die beiden Maßnahmen (Druckgradientlimitierung und Drehzahlerhöhung) einen synergetischen Effekt erzielen können. Durch diese Lösung wird bei Bedarf einer höheren Druckanstiegsgeschwindigkeit die Pumpendrehzahl aktiv erhöht, um den erforderlichen Volumenstrom bereitzustellen. Diese Strategie ermöglicht eine flexible Reaktion auf dynamische Laständerungen und minimiert das Risiko von Niederdruckeinbrüchen.

In vielen Fällen ist die maximal auftretende Druckanstiegsgeschwindigkeit im Voraus nicht bekannt. Hier bietet sich eine dynamische Anpassung des Gradientenlimits basierend auf dem gemessenen Niederdruck bzw. Niederdruckgradienten an. Dieses sogenannte "dynamische Hochdruckgradient"-Feature reduziert die Pumpendynamik bei Unterschreitung eines definierten Niederdruckwertes oder Überschreitung eines maximal zulässigen Niederdruckgradienten. Durch diese adaptive Regelung wird das System stabilisiert und das Auftreten von Niederdruckeinbrüchen verhindert.

Sollten die zuvor beschriebenen Maßnahmen zur Reduzierung der Pumpendynamik nicht ausreichen, können elektrische Zusatzventile eingesetzt werden. Zwei Optionen stehen zur Verfügung:
- Kurzschlussventil 99: Dieses Ventil verbindet bei Bedarf (wenn die Dynamik der Hydropumpe nicht schnell genug limitiert werden kann) die Hochdruck- und Niederdruckseite des Systems, wodurch ein Druckausgleich und eine Reduzierung des Kompressionsvolumens erzielt werden.
- Elektrisch abschaltbares Spülventil: Durch kurzzeitiges Abschalten des Spülventils wird der Volumenstrombedarf reduziert und somit der Druckabfall minimiert. Die Aktivierung dieses Ventils kann entweder durch die Überschreitung einer definierten Druckanstiegsgeschwindigkeit oder durch die Unterschreitung eines bestimmten Niederdruckwertes ausgelöst werden.

In dieser Patentanmeldung wird auch eine Steuereinheit (nicht in den Bildern dargestellt) offenbart, die das beschriebene Verfahren ausführt. Darüber hinaus werden ein Computerprogramm, das eingerichtet ist, ein Verfahren gemäß einer der Ausführungsformen auszuführen, und ein maschinenlesbares Speichermedium mit dem darauf gespeicherten Computerprogramm offenbart.

Das beschriebene Verfahren kann in verschiedenen Arten von Arbeitsmaschinen eingesetzt werden. Im Wesentlichen kann das Verfahren bei allen Arbeitsmaschinen mit hydrostatischem Antrieb und ansteuerbarer Antriebsmaschine (wie einem Dieselmotor) verwendet werden. Anwendungsbeispiele sind z. B. Feldhäcksler, Mähdrescher, Schneefräsen oder Straßenfräsen.

Obwohl die vorliegende Erfindung unter Bezugnahme auf die oben beschriebenen Ausführungsformen beschrieben wurde, ist es für den Fachmann offensichtlich, dass verschiedene Modifikationen, Variationen und Verbesserungen der vorliegenden Erfindung im Lichte der oben beschriebenen Lehre und innerhalb des Schutzbereichs der beigefügten Ansprüche möglich sind.

Bereiche, die dem Fachmann bekannt sind, wurden hier nicht beschrieben, um die beschriebene Erfindung nicht unnötig zu verkomplizieren.

Dementsprechend ist die Erfindung nicht durch die spezifischen veranschaulichenden Ausführungsformen beschränkt, sondern nur durch den Schutzbereich der beigefügten Ansprüche.

## Patentansprüche

1. Verfahren zum Betreiben eines Hydrauliksystems (100) einer mobilen Arbeitsmaschine, wobei das Hydrauliksystem (100) mit einer Hydraulikpumpe (2) versehen ist, die über eine erste Leitung (10) und eine zweite Leitung (11) mit einem Hydraulikmotor (4) verbunden ist, wobei das Verfahren folgende Schritte umfasst:
a) Steuern der Hydraulikpumpe mittels mindestens einer Stellgröße, wobei durch die mindestens eine Stellgröße ein Schwenkwinkel der Hydraulikpumpe und/oder eine Drehzahl der Pumpe direkt oder indirekt steuerbar ist;
b) Ermitteln einer Limitierungsgröße für die Hydraulikpumpendynamik mindestens auf Basis einer Betriebsgröße des Hydrauliksystems;
c) Limitieren einer Hydraulikpumpendynamik der Hydraulikpumpe unter Berücksichtigung der im Schritt ermittelten Limitierungsgröße, sodass der Druck in einer von der ersten und der zweiten Leitung während dem Steuern der Hydraulikpumpe nicht einen unteren Grenzwert unterschreitet.

2. Verfahren nach Anspruch 1, wobei in dem Schritt c) eine Druckanstiegsgeschwindigkeit limitiert wird, wobei die Druckanstiegsgeschwindigkeit eine Druckänderung an der Druckseite der Hydropumpe über die Zeit darstellt.

3. Verfahren nach einem der Ansprüche 1 oder 2, wobei in dem Schritt b) die Betriebsgröße eine Drehzahl der Hydropumpe ist, sodass bei einer höheren Drehzahl die im Schritt b) ermittelte Limitierungsgröße verursacht, dass in dem Schritt c) die Hydraulikpumpendynamik weniger limitiert wird.

4. Verfahren nach einem der Ansprüche 1 bis 3, wobei das Hydrauliksystem weiterhin eine Speisepumpe enthält, die konfiguriert ist, Druckmittel in die erste und/oder in die zweite Leitung zu fördern, wobei die Drehzahl der Hydropumpe und der Speisepumpe abhängig voneinander sind, wobei das Verfahren weiterhin den folgenden Schritt enthält:
d) Erhöhen der Drehzahl der Hydraulikpumpe, wenn festgestellt wurde, dass eine Limitierung der Hydraulikpumpendynamik stattfinden soll, sodass die Drehzahl der Speisepumpe erhöht wird.

5. Verfahren nach einem der Ansprüche 1 bis 4, wobei das Verfahren weiterhin folgende Schritte umfasst:
e) Ermitteln eines aktuellen Druckwertes, der einem Druck an der Niederdruckseite der Hydropumpe oder einer Größe entspricht, die von diesem abhängig ist;
wobei in dem Schritt b) die Betriebsgröße dem im Schritt e) ermittelten Druckwert entspricht.

6. Verfahren nach Anspruch 5, wobei in dem Schritt e) der Druckwert ein Druckgradient des Druckes an der Niederdruckseite ist, sodass in dem Schritt c) die Hydraulikpumpendynamik so limitiert wird, dass der Druckgradient an der Niederdruckseite begrenzt wird.

7. Verfahren nach einem der Ansprüche 1 bis 6, wobei in dem Schritt b) die Limitierungsgröße mittels einer Funktion ermittelt wird, wobei die genannte Funktion als Eingang die Betriebsgröße hat und als Ausgang die Limitierungsgröße ermittelt.

8. Verfahren nach Anspruch 3 und 5, wobei in dem Schritt b) die Limitierungsgröße auf Basis der Drehzahl der Hydropumpe und des im Schritt e) ermittelten Druckes ermittelt wird, wobei in einem ersten Schritt zwei provisorische Limitierungsgrößen auf Basis jeweils der Drehzahl und des Druckes ermittelt werden, wobei die genannte Limitierungsgröße in einem zweiten Schritt als Minimum der zwei provisorischen Limitierungsgrößen berechnet wird.

9. Verfahren nach Anspruch 8, wobei in dem genannten zweiten Schritt weiterhin eine physikalische Limitierung der Hydraulikpumpe berücksichtigt wird.

10. Steuereinheit, welche eingerichtet ist, ein Verfahren nach einem der Ansprüche 1 bis 9 auszuführen.

11. Arbeitsmaschine, die ein Hydrauliksystem (100) umfasst, wobei das Hydrauliksystem (100) mit einer ersten Hydromaschine (2) mit verstellbarem Verdrängungsvolumen und mit einer zweiten Hydromaschine versehen ist, wobei die Hydromaschinen (2) fluidisch verbunden sind, und wobei die erste Hydromaschine (2) mit einer Antriebsmaschine und die zweite Hydromaschine mit mindestens einem anzutreibenden Rad oder einer anzutreibenden Kette oder Achse koppelbar ist, wobei die Arbeitsmaschine eine Steuereinheit nach Anspruch 10 umfasst.

12. Computerprogramm, das dazu eingerichtet ist, das Verfahren nach einem der Ansprüche 1 bis 9 auszuführen und/oder zu steuern.

13. Maschinenlesbares Speichermedium mit einem darauf gespeicherten Computerprogramm nach Anspruch 12.
